# FASCICULE DE BREVET EUROPEEN

(11) **EP 3 853 492 B1**
(45) Date de publication et mention de la délivrance du brevet: **15.03.2023**
(21) Numéro de dépôt: 19783588.7
(22) Date de dépôt: 04.09.2019
(51) Int. Cl.: F16D 65/00

(54) **DISPOSITIF DE RECUPERATION DE PARTICULES DU FREINAGE D'UN VEHICULE AUTOMOBILE EQUIPE D'AIMANTS**
VORRICHTUNG ZUR RÜCKGEWINNUNG DER AUS DER ABBREMSUNG EINES MIT MAGNETEN AUSGESTATTETEN KRAFTFAHRZEUGS STAMMENDEN PARTIKEL
DEVICE FOR RECOVERING THE PARTICLES ORIGINATING FROM THE BRAKING OF A MOTOR VEHICLE FITTED WITH MAGNETS

(30) Priorité: 17.09.2018 FR 1858346
(43) Date de publication de la demande: 28.07.2021
(73) Titulaire: PSA Automobiles SA, 78300 Poissy (FR)
(72) Inventeur: PALPACUER, Eric, 75013 PARIS (FR)
(86) Numéro de dépôt international: PCT/FR2019/052037
(87) Numéro de publication internationale: WO 2020/058596

(56) Documents cités:
- EP-A1- 2 309 146
- EP-A2- 1 256 739
- WO-A1-81/02690
- DE-A1-102005 006 465
- DE-A1-102017 007 429
- US-A1- 2014 262 633
- US-A1- 2018 031 059

## Description

La présente invention concerne un dispositif de récupération de particules pour un système de freinage de véhicule automobile, ainsi qu'un système de freinage et un véhicule automobile équipés de tels dispositifs de récupération de particules.

Les véhicules automobiles comportent des systèmes de freinage comprenant des garnitures équipées de matériaux de friction délivrant une pression sur des disques ou des tambours liés en rotation aux roues du véhicule, afin d'appliquer dessus un couple de freinage.

Les freinages du véhicule entraînent une usure par abrasion des matériaux de friction, ainsi qu'une usure réduite des disques ou des tambours métalliques, qui génèrent des particules dispersées dans l'air ambiant en causant une pollution de cet air. Les normes antipollution imposeront dans le futur des limitations des émissions de particules polluantes venant du freinage.

Un dispositif connu de récupération des particules émises par des freins à disque, présenté notamment par les documents EP-A1-2309146 et JP-A-2018003940, utilise des perçages réalisés sur les garnitures de freins, traversant ces garnitures pour conduire les particules émises entre le matériau de friction et une face du disque à une cavité arrière contenant un aimant.

Les particules des matériaux de friction contenant des éléments métalliques, et les particules métalliques des disques, sont attirées par l'aimant disposé à plat au fond de la cavité, parallèlement à la garniture, afin de s'accumuler dans cette cavité formant un réservoir pour éviter une dispersion dans l'air. Lors d'un entretien du véhicule on dépose le réservoir pour vider les particules.

Toutefois l'aimant disposé à plat au fond du réservoir, se couvrant progressivement de particules, se trouve relativement loin de la face avant de la garniture en appui sur le disque et émettant les particules, ce qui rend son attraction plus faible pour attirer ces particules au travers des perçages des garnitures puis jusqu'au fond du réservoir.

De plus la face arrière de l'aimant étant en appui au fond du réservoir, seule sa face avant est utilisée pour la collecte des particules ce qui réduit sa force d'attraction. Un certain nombre de particules peuvent se disperser autour des garnitures en se perdant dans l'air, le rendement du dispositif de récupération est faible.

La présente invention a notamment pour but d'éviter ces inconvénients de la technique antérieure.

Elle propose à cet effet un dispositif de récupération des particules émises par un système de freinage de roue de véhicule, comprenant des garnitures avec des matériaux de friction présentant une face avant de frottement en contact avec un élément tournant, et des cavités équipées chacune d'un aimant de récupération des particules, les garnitures comportant des perçages débouchant vers l'arrière sur ces cavités, ce dispositif étant remarquable en ce que chaque aimant comporte des plaques présentant des faces plates recevant les particules, qui sont disposées suivant la direction perpendiculaire à la face de frottement.

Un avantage de ce dispositif de récupération des particules est que les faces plates de l'aimant disposées suivant la direction perpendiculaire, peuvent se prolonger dans le réservoir suivant toute sa direction perpendiculaire ce qui donne des surfaces aimantées près de l'entrée de ce réservoir, appliquant une force d'attraction élevée juste en arrière des perçages de la garniture. De plus on peut utiliser les deux faces des aimants plats ce qui double sensiblement la surface aimantée accessible aux particules, par rapport à un aimant fixé à plat au fond de ce réservoir présentant une seule face aimantée.

Le dispositif de récupération des particules suivant l'invention peut de plus comporter une ou plusieurs des caractéristiques suivantes, qui peuvent être combinées entre elles.

Avantageusement, chaque aimant présente dans une direction parallèle à la face de frottement une forme en croix.

De plus, avantageusement les cavités cylindriques présentent des rainures axiales recevant les extrémités des croix formant les aimants.

Avantageusement, chaque aimant s'étend sur toute la profondeur de la cavité.

En particulier, les garnitures peuvent présenter une face de frottement plate venant sur un disque de frein.

Avantageusement, le matériau de friction de chaque garniture comporte des rainures de circulation des particules.

Dans ce cas, en particulier les rainures peuvent comporter une partie centrale entourant un perçage central de la garniture, et des boucles débouchant des deux côtés sur cette partie centrale.

L'invention a aussi pour objet un système de freinage comprenant un disque de frein, un étrier de frein et deux garnitures de serrage de ce disque de frein, comportant un dispositif de récupération comprenant l'une quelconque des caractéristiques précédentes, équipé d'une cavité de récupération des particules disposée sur la face arrière de chaque garniture.

Dans ce cas, avantageusement une cavité est réalisée à l'intérieur d'un piston de serrage hydraulique du frein.

L'invention a de plus pour objet un véhicule automobile équipé d'un système de freinage comprenant des garnitures, qui comporte des dispositifs de récupération des particules comprenant l'une quelconque des caractéristiques précédentes.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- la figure 1 est une vue éclatée d'un frein à disque comprenant un dispositif de récupération selon l'invention ;
- la figure 2 est une vue en coupe axiale de ce frein à disque, passant par l'axe du piston de l'étrier de frein ;
- les figures 3a et 3b sont des vues respectivement du piston et de l'aimant de piston de ce système de freinage ;
- les figures 4a et 4b sont des vues respectivement du réservoir et de l'aimant de réservoir de ce système de freinage ; et
- les figures 5 et 6 sont des vues en coupe transversale de ce frein, présentées respectivement suivant les plans de coupe V-V et VI-VI.

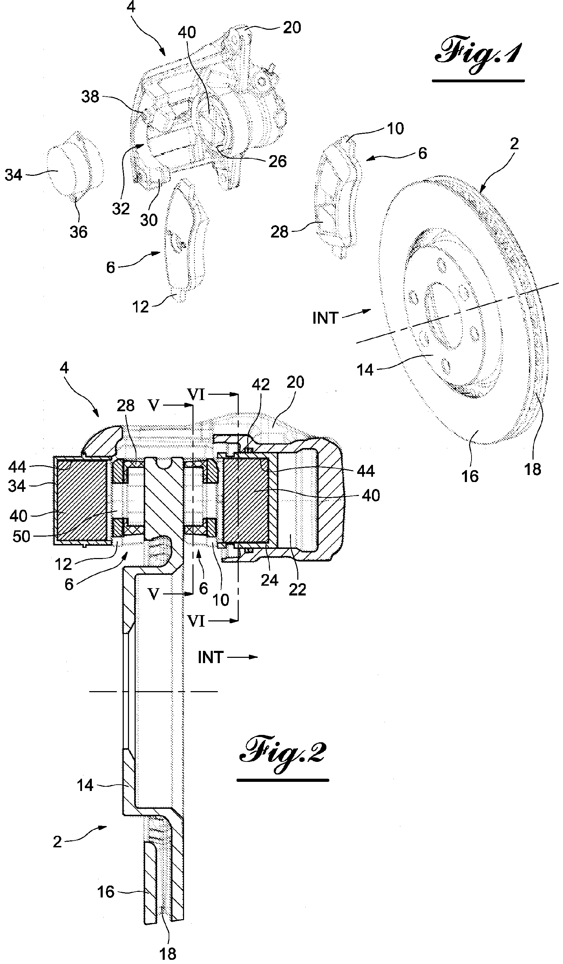

Les figures 1 et 2 présentent un étrier de freinage 4 recevant un disque de frein 2, pressant sur chaque face 16 de ce disque une garniture de freinage 6 équipée d'un matériau de friction 28, comprenant une garniture interne 10 disposée du côté axial intérieur, indiqué par la flèche INT, et une garniture externe 12.

Le disque de frein 2 comporte un moyeu 14 recevant des perçages de fixation sur le porte-moyeu de la suspension, et deux faces transversales parallèles de freinage 16, présentant entre elles des perçages radiaux 18 permettant une ventilation intérieure du disque.

L'étrier de frein 4 comporte un corps 20 réalisé par un moulage, comprenant du côté intérieur un alésage axial formant une chambre cylindrique 22, recevant un piston 24 actionné par une pression hydraulique, présentant une surface avant formant une couronne 26 pressant sur la face arrière de la garniture interne 10. Un joint d'étanchéité annulaire 42 entoure le piston 24 pour assurer l'étanchéité de la chambre 22.

Le corps 20 comporte en face du piston 24, une fourche 30 comprenant deux doigts dégageant un espace central circulaire 32 aligné sur le piston 24, recevant du côté intérieur l'appui de la face arrière de la garniture externe 12.

Le corps 20 constitue une pince serrant par ses garnitures 6 les faces 16 du disque de frein 2, qui est reliée par une coulisse axiale au porte-moyeu afin de se positionner axialement librement suivant l'usure des garnitures.

Le piston 24 comporte une cavité cylindrique 44 présentant vers l'extérieur une ouverture venant sur la face arrière de la garniture interne 10, formant un réservoir intégré recevant un aimant de collage 40 des particules émises.

Un réservoir cylindrique additionnel 34 ajusté dans l'espace central circulaire 32 de la fourche 30, est entouré par une bride extérieure transversale 36 venant en appui sur la face extérieure du corps de l'étrier 20, comprenant deux perçages recevant des vis de fixation 38 sur ce corps. Le réservoir additionnel 34 comporte une cavité cylindrique présentant vers l'intérieur une ouverture venant sur la face arrière de la garniture externe 12, formant aussi un réservoir recevant un aimant de collage 40.

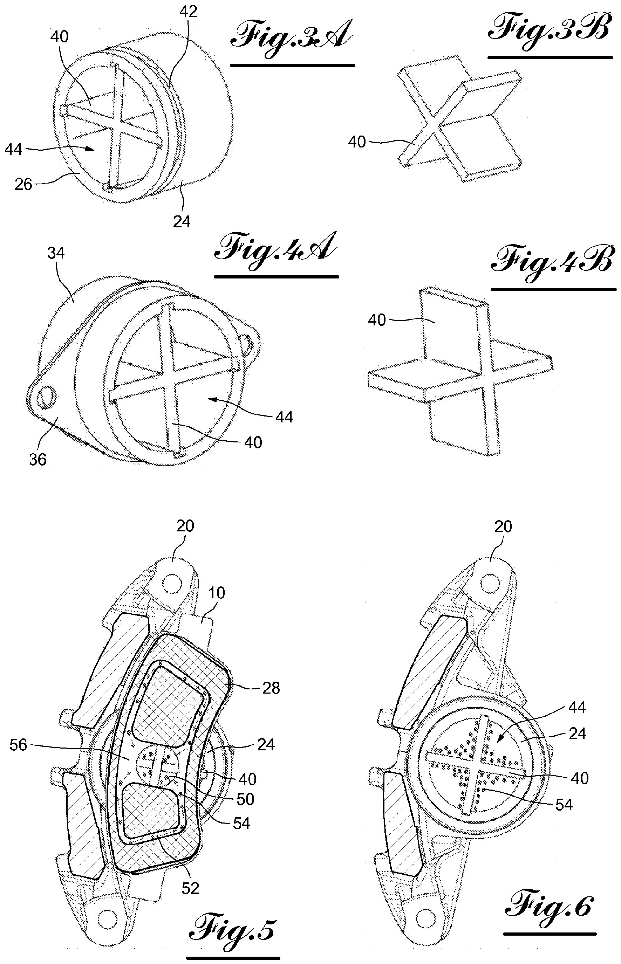

Les figures 3a et 4a présentent respectivement le piston 24 et le réservoir additionnel 34, disposant d'une cavité intérieure 44 identique recevant le même aimant de collage 40. Chaque cavité intérieure 44 comporte quatre rainures axiales régulièrement réparties, s'étendant sur toute la longueur de cette cavité.

Les figures 3b et 4b présentent l'aimant 40 formé par deux plans perpendiculaires allongés dans la direction axiale, réalisant en coupe transversale une croix comprenant quatre branches identiques. Chaque extrémité des branches d'un aimant 40 s'ajuste dans une rainure axiale des cavités intérieures 44, de manière à maintenir cet aimant dans toutes les directions, à l'intérieur du piston 24 ou du réservoir additionnel 34.

Les deux garnitures interne 10 et externe 12 sont symétriques par rapport au disque de frein 2. La figure 5 présente la garniture interne 10 comprenant un perçage central 50 aligné sur l'axe du piston 24, perpendiculaire à la face de frottement, présentant un diamètre sensiblement égal au rayon de la cavité intérieure 44 de ce piston.

Une rainure réalisée sur toute l'épaisseur du matériau de friction 28, comporte une partie centrale 56 constituant un dégagement important autour du perçage central 50, de forme sensiblement rectangulaire, présentant dans la direction tangentielle une largeur égale au diamètre de ce perçage central, et dans la direction radiale une longueur couvrant plus des trois-quarts de ce matériau.

Chaque grand côté de la partie centrale 56 comporte une boucle 52 comprenant une direction tangentielle, puis une direction radiale et enfin la direction tangentielle inverse afin de relier les deux angles de cette partie centrale.

Les boucles 52 constituent un drainage faisant le tour de chaque garniture 6, qui permet aux particules émises 54 sur toute la face de frottement de se déplacer dans ces boucles pour arriver dans la partie centrale 56. Les particules 54 sont ensuite attirées par l'aimant 40 venant en appui sous la face arrière de la garniture 6, au plus près de cette face arrière, et passent dans le perçage central 50 pour venir se loger dans la cavité intérieure 44 séparée en quatre espaces.

On obtient ainsi un circuit très court entre les faces de frottement émettant les particules 54, et l'aimant 40 se trouvant juste en arrière de chaque garniture.

La figure 6 présente la grande surface donnée par la croix formant l'aimant 40, qui reçoit les particules 54 sur les deux faces de ses quatre branches. On obtient à la fois une surface maximum des aimants 40 pouvant recevoir les particules, représentant environ 95% de la surface totale de ces aimants, et une bonne proximité des aimants par rapport aux faces de frottement.

Lors de l'entretien du véhicule on profite des changements de garnitures 6 pour vider les cavités 44 de ses particules 54, afin de repartir pour la récupération des particules de ces nouvelles garnitures.

En variante on peut utiliser un dispositif de récupération des particules suivant l'invention sur un frein à tambour, en installant des cavités sur la face arrière des segments de frein, du côté opposé au matériau de friction.

## Revendications

1. Dispositif de récupération des particules (54) émises par un système de freinage de roue de véhicule, comprenant des garnitures (6) avec des matériaux de friction (28) présentant une face avant de frottement en contact avec un élément tournant (2), ledit dispositif de récupération des particules (54) comprenant aussi des cavités (44) équipées chacune d'un aimant (40) de récupération des particules (54), les garnitures (6) comportant des perçages (50) débouchant vers l'arrière sur ces cavités (44), **caractérisé en ce que** chaque aimant (40) comporte des plaques présentant des faces plates recevant les particules (54), qui sont disposées suivant la direction perpendiculaire à la face de frottement.

2. Dispositif de récupération selon la revendication 1, **caractérisé en ce que** chaque aimant (40) présente dans une direction parallèle à la face de frottement une forme en croix.

3. Dispositif de récupération selon la revendication 2, **caractérisé en ce que** les cavités cylindriques (44) présentent des rainures axiales recevant les extrémités des croix formant les aimants (40).

4. Dispositif de récupération selon l'une quelconque des revendications précédentes, **caractérisé en ce que** chaque aimant (40) s'étend sur toute la profondeur de la cavité (44).

5. Dispositif de récupération selon l'une quelconque des revendications précédentes, **caractérisé en ce que** les garnitures (6) présentent une face de frottement plate venant sur un disque de frein (2).

6. Dispositif de récupération selon la revendication 5, **caractérisé en ce que** le matériau de friction (28) de chaque garniture (6) comporte des rainures de circulation des particules (54).

7. Dispositif de récupération selon la revendication 6, **caractérisé en ce que** les rainures comportent une partie centrale (56) entourant un perçage central (50) de la garniture (6), et des boucles (52) débouchant des deux côtés sur cette partie centrale (56).

8. Système de freinage comprenant un disque de frein (2), un étrier de frein (4) et deux garnitures (6) de serrage de ce disque de frein (2), **caractérisé en ce qu'**il comporte un dispositif de récupération selon l'une quelconque des revendications précédentes, équipé d'une cavité (44) de récupération des particules (54) disposée sur la face arrière de chaque garniture (6).

9. Système de freinage selon la revendication 8, **caractérisé en ce qu'**une des cavités (44) est réalisée à l'intérieur d'un piston (24) de serrage hydraulique du frein.

10. Véhicule automobile équipé d'un système de freinage comprenant des garnitures, **caractérisé en ce qu'**il comporte des dispositifs de récupération des particules (54) selon l'une quelconque des revendications 1 à 7.

## Patentansprüche

1. Vorrichtung zur Rückgewinnung von Partikeln (54), die von einem Bremssystem eines Fahrzeugrades emittiert werden, umfassend Beläge (6) mit Reibmaterialien (28), die eine vordere Reibfläche aufweisen, die mit einem drehbaren Element (2) in Kontakt ist, wobei die Vorrichtung (54) zur Rückgewinnung von Partikeln auch Hohlräume (44) aufweist, die jeweils mit einem Magneten (40) zur Rückgewinnung der Partikel (54) ausgestattet sind, wobei die Beläge (6) Bohrungen (50) aufweisen, die nach hinten in diese Hohlräume (44) münden, **dadurch gekennzeichnet, dass** jeder Magnet Die Partikel (54) aufnehmende flache Flächen, die senkrecht zur Reibfläche angeordnet sind.

2. Rückgewinnungseinrichtung nach Anspruch 1, **dadurch gekennzeichnet, dass** jeder Magnet (40) in einer zur Reibfläche parallelen Richtung kreuzförmig ausgebildet ist.

3. Rückgewinnungsvorrichtung nach Anspruch 2, **dadurch gekennzeichnet, dass** die zylindrischen Hohlräume (44) axiale Nuten aufweisen, die die Enden der die Magnete (40) bildenden Kreuze aufnehmen.

4. Rückgewinnungsvorrichtung nach einem der vorhergehenden Ansprüche, **dadurch gekennzeichnet, dass** sich jeder Magnet (40) über die gesamte Tiefe des Hohlraums (44) erstreckt.

5. Bergungsvorrichtung nach einem der vorhergehenden Ansprüche, **dadurch gekennzeichnet, dass** die Beläge (6) eine flache Reibfläche aufweisen, die auf eine Bremsscheibe (2) auftrifft.

6. Rückgewinnungsvorrichtung nach Anspruch 5, **dadurch gekennzeichnet, dass** das Reibmaterial (28) jeder Dichtung (6) Partikelumlaufnuten (54) aufweist.

7. Auffangvorrichtung nach Anspruch 6, **dadurch gekennzeichnet, dass** die Nuten einen eine zentrale Bohrung (50) der Dichtung (6) umgebenden Mittelteil (56) und beidseitig an diesem Mittelteil (56) mündende Schlaufen (52) aufweisen.

8. Bremssystem, das eine Bremsscheibe (2), einen Bremssattel (4) und zwei Bremsbeläge (6) zum Anziehen dieser Bremsscheibe (2) umfasst, **dadurch gekennzeichnet, dass** es eine Rückgewinnungsvorrichtung nach einem der vorhergehenden Ansprüche umfasst, die mit einem Hohlraum (44) zum Rückgewinnen der Partikel (54) ausgestattet ist, der auf der Rückseite jedes Belags (6) angeordnet ist.

9. Bremsanlage nach Anspruch 8, **dadurch gekennzeichnet, dass** eine der Ausnehmungen (44) innerhalb eines hydraulischen Bremskolbens (24) ausgebildet ist.

10. Kraftfahrzeug mit einem Bremssystem, das Beläge umfasst, **dadurch gekennzeichnet, dass** es Partikelrückgewinnungsvorrichtungen (54) nach einem der Ansprüche 1 bis 7 umfasst.

## Claims

1. Device for recovering particles (54) emitted by a vehicle wheel braking system, comprising linings (6) with friction materials (28) having a front friction face in contact with a rotating element (2), said particle recovery device (54) also comprising cavities (44) each equipped with a magnet (40) for recovering particles (54), the linings (6) comprising holes (50) opening towards the rear onto these cavities (44), **characterized in that** each magnet (40) comprises plates having flat faces receiving the particles (54), which are arranged in the direction perpendicular to the friction face.

2. Recovery device according to Claim 1, **characterized in that** each magnet (40) has a cross-shaped shape in a direction parallel to the friction face.

3. Recovery device according to Claim 2, **characterized in that** the cylindrical cavities (44) have axial grooves receiving the ends of the crosses forming the magnets (40).

4. Recovery device according to any one of the preceding claims, **characterized in that** each magnet (40) extends over the entire depth of the cavity (44).

5. Recovery device according to any one of the preceding claims, **characterized in that** the linings (6) have a flat friction face which comes onto a brake disk (2).

6. Recovery device according to Claim 5, **characterized in that** the friction material (28) of each lining (6) comprises grooves for the circulation of the particles (54).

7. Recovery device according to Claim 6, **characterized in that** the grooves comprise a central part (56) surrounding a central hole (50) in the lining (6), and loops (52) opening on both sides onto this central part (56).

8. Braking system comprising a brake disk (2), a brake caliper (4) and two linings (6) for clamping this brake disk (2), **characterized in that** it comprises a recovery device according to any one of the preceding claims, equipped with a cavity (44) for recovering particles (54) arranged on the rear face of each lining (6).

9. Braking system according to Claim 8, **characterized in that** one of the cavities (44) is made inside a piston (24) for hydraulic application of the brake.

10. Motor vehicle equipped with a braking system comprising linings, **characterized in that** it comprises particle recovery devices (54) according to any one of Claims 1 to 7.
